# EUROPEAN PATENT APPLICATION

(11) **EP 1 814 313 A2**
(43) Date of publication of application: **01.08.2007**
(21) Application number: 06117297.9
(22) Date of filing: 17.07.2006
(51) Int. Cl.: H04N 5/225

(54) **Upright infrared camera with foldable monitor**

(30) Priority: 27.01.2006 CN 200620001956
(71) Applicant: Guangzhou SAT Infrared Technology Co., Ltd., Guangzhou Economic & Techn. Development District Guangzhou 510730 (CN)
(72) Inventor: Wu, Jiping, 510730, Guangzhou (CN)
(74) Representative: Gervasi, Gemma

(57) **Abstract**

An infrared camera system and a method thereof. The system includes a first housing and a handling component. The handling component includes a first end and a second end, and the first end is in contact with the first housing. Additionally, the system includes a second housing including a third end and a fourth end. The third end is in contact with the first housing. Moreover, the system includes a supporting component. The supporting component is in contact with the handling component at the second end and in contact with the second housing at the fourth end. Also, the system includes an infrared detector located within at least one of the first housing, the second housing, the handling component, and the supporting component. The handling component and the second housing are at least partially separated by a gap region. The supporting component includes a first surface.

## Description

### BACKGROUND OF THE INVENTION

The present invention is directed to infrared cameras. More particularly, the invention provides an upright infrared camera with foldable monitor. Merely by way of example, the invention has been applied to temperature measurement and inspection. But it would be recognized that the invention has a much broader range of applicability.

Infrared cameras have been widely used for detecting infrared radiation. For example, the wavelength spectrum for infrared radiation can range from 0.75 µm to 1000 µm. In another example, the wavelength spectrum for infrared radiation can be divided into the near infrared region, the middle infrared region, and the far infrared region. For a given wavelength, the infrared radiation power from an object varies with temperature of the object. Therefore, the infrared cameras can perform various functions. For example, the infrared cameras can be used for security surveillance. In another example, the infrared camera can be used for product inspection. In yet another example, infrared camera can be used for temperature measurement.

Conventional infrared cameras often are designed in shape similar to visible-light camcorders, gun-shape thermometers, visible-light cameras, or binoculars. Among them, the infrared cameras that are similar to visible-light cameras or binoculars often need a human operator to use both hands for operation; hence they are not convenient in practice. Additionally, the infrared cameras that are similar to gun-shape thermometers can be used with one hand, but they often cannot maintain an upright position without supported by a tripod. Use of a tripod often is troublesome in field applications. Moreover, the infrared cameras that are similar to visible-light camcorders can be placed in an upright position, but they usually cannot be operated with a signal hand. Also, these infrared cameras often are bulky and heavy, so they can be difficult to carry around.

Hence it is highly desirable to improve techniques for infrared cameras.

### BRIEF SUMMARY OF THE INVENTION

The present invention is directed to infrared cameras. More particularly, the invention provides an upright infrared camera with foldable monitor. Merely by way of example, the invention has been applied to temperature measurement and inspection. But it would be recognized that the invention has a much broader range of applicability.

According to one embodiment of the present invention, an infrared camera system is provided. The system includes a first housing and a handling component. The handling component includes a first end and a second end, and the first end is in contact with the first housing. Additionally, the system includes a second housing including a third end and a fourth end. The third end is in contact with the first housing. Moreover, the system includes a supporting component. The supporting component is in contact with the handling component at the second end and in contact with the second housing at the fourth end. Also, the system includes an infrared detector located within at least one of the first housing, the second housing, the handling component, and the supporting component. The handling component and the second housing are at least partially separated by a gap region. The supporting component includes a first surface. The system is associated with a weight ranging from 0.6 kilograms to 2.5 kilograms, and is associated with a center of gravity located within the handling component.

According to another embodiment, a system for infrared detection includes a first housing, and an infrared detector located within the first housing. Additionally, the system includes a handling component including a first end and a second end. The first end is attached to the first housing. Moreover, the system includes a second housing including a third end and a fourth end. The third end is attached to the first housing. Also, the system includes a supporting component. The supporting component is attached to the handling component at the second end and attached to the second housing at the fourth end. The handling component and the second housing are at least partially separated by a gap region. The supporting component includes a first surface. The system is capable of being placed on a horizontal planar surface and being in contact with the horizontal planar surface through only the first surface. Also, the system is associated with a weight ranging from 0.6 kilograms to 2.5 kilograms, and is associated with a center of gravity located within the handling component.

According to yet another embodiment, a system for infrared detection includes a first housing, and an infrared detector located within the first housing. Additionally, the system includes a handling component including a first end and a second end. The first end is attached to the first housing. Moreover, the system includes a second housing including a third end and a fourth end. The third end is attached to the first housing. Also, the system includes a supporting component. The supporting component is attached to the handling component at the second end and attached to the second housing at the fourth end. Additionally, the system includes a monitor including a first surface for displaying at least one image. The supporting component includes a second surface. The monitor is capable of being rotated around an axis from a first position to a second position, and the axis is substantially parallel to the second surface. At the first position, the first surface is substantially perpendicular to the second surface.

Many benefits are achieved by way of the present invention over conventional techniques. For example, some embodiments of the present invention provide a system for infrared detection that is capable of being operated with a single hand by a user. Certain embodiments of the present invention provide a system for infrared detection that is capable of being placed on a horizontal planar surface. For example, the system is in contact with the horizontal planar surface through only the bottom surface of the system.

Depending upon embodiment, one or more of these benefits may be achieved. These benefits and various additional objects, features and advantages of the present invention can be fully appreciated with reference to the detailed description and accompanying drawings that follow.

### BRIEF DESCRIPTION OF THE DRAWINGS

Figure 1 is a simplified rear-left perspective view of system for infrared detection with monitor in unfolded position according to an embodiment of the present invention;

Figure 2A is a simplified rear-right perspective view of system for infrared detection with monitor in unfolded position according to an embodiment of the present invention.

Figure 2B is a simplified rear-right perspective view of system for infrared detection with monitor in folded position according to an embodiment of the present invention.

Figure 3 is a simplified front-right perspective view of system for infrared detection with monitor in unfolded position according to an embodiment of the present invention.

Figure 4 is a simplified left elevational view of system for infrared detection with monitor in folded or unfolded position according to an embodiment of the present invention.

Figures 5(A) and (B) are simplified diagrams showing certain dimensions of system for infrared detection according to an embodiment of the present invention;

Figure 6 is a simplified diagram showing electrical and optical components of system for infrared detection according to an embodiment of the present invention.

### DETAILED DESCRIPTION OF THE INVENTION

The present invention is directed to infrared cameras. More particularly, the invention provides an upright infrared camera with foldable monitor. Merely by way of example, the invention has been applied to temperature measurement and inspection. But it would be recognized that the invention has a much broader range of applicability.

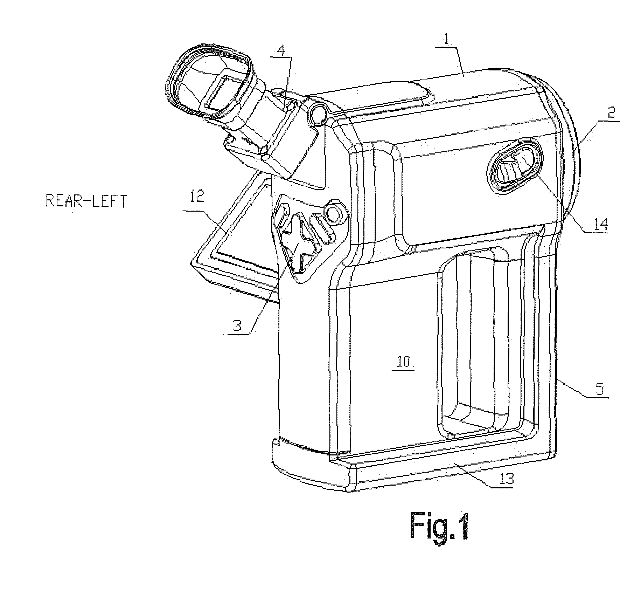

Figures 1-4 show a simplified system for infrared detection according to an embodiment of the present invention. These diagrams are merely examples, which should not unduly limit the scope of the claims. One of ordinary skill in the art would recognize many variations, alternatives, and modifications. The system 100 includes housings 1 and 5, an infrared optical lens 2, a control panel 3, a viewfinder window 4, a laser 6, a visible-light camcorder 7, a flash 8, an electrical interface 9, a handle 10, a battery 11, a monitor 12, a supporting component 13, and a switch 14. Although the above has been shown using a selected group of components for the system 100, there can be many alternatives, modifications, and variations. For example, some of the components may be expanded and/or combined. Other components may be inserted to those noted above. Depending upon the embodiment, the arrangement of components may be interchanged with others replaced. Further details of these components are found throughout the present specification and more particularly below.

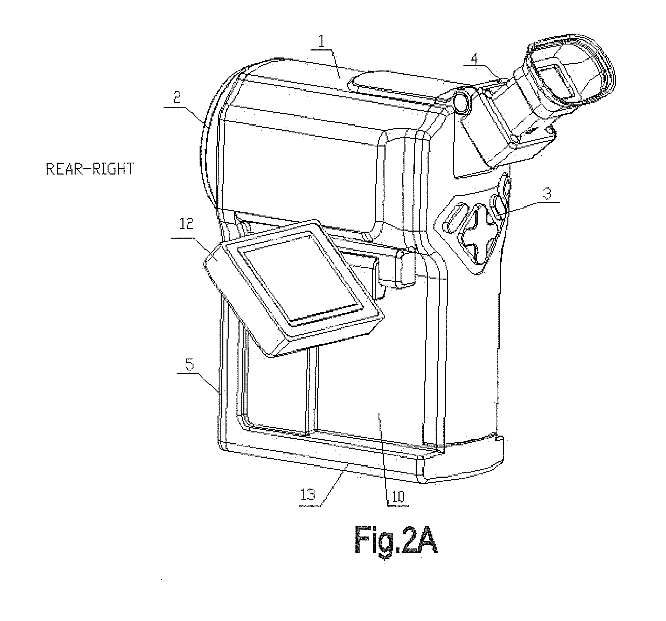

Figures 1-4 includes Figures 1, 2A, 2B, 3, and 4. Figure 1 is a simplified rear-left perspective view of the system 100 with monitor in unfolded position according to an embodiment of the present invention. Figure 2A is a simplified rear-right perspective view of the system 100 with monitor in unfolded position according to an embodiment of the present invention. Figure 2B is a simplified rear-right perspective view of the system 100 with monitor in folded position according to an embodiment of the present invention.

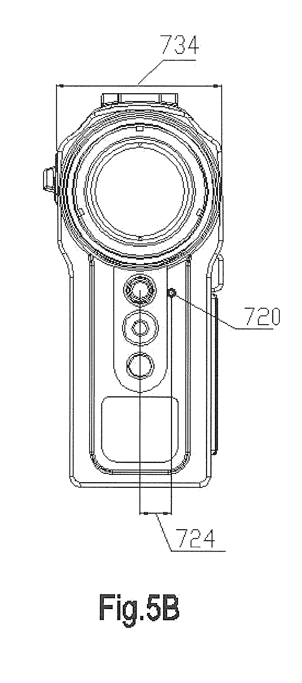

Figure 3 is a simplified front-right perspective view of the system 100 with monitor in unfolded position according to an embodiment of the present invention. Figure 4 is a simplified left elevational view of the system 100 with monitor in folded or unfolded position according to an embodiment of the present invention. As discussed above and further emphasized here, these diagrams are merely examples, which should not unduly limit the scope of the claims. One of ordinary skill in the art would recognize many variations, alternatives, and modifications.

As shown in Figures 1-4, the housing 1 has a elongate shape. For example, the housing 1 has a circumference or width that is smaller or narrower than length or width. At or close to one end of the housing 1, there is the infrared optical lens 2. For example, the infrared optical lens 2 is coupled to one or more other infrared optical lenses to form an infrared optical lens system. At or close to the other end of the housing 1, there is the control panel 3. For example, the control panel 3 includes a button that can be pushed at four ends. In another example, the control panel includes two buttons each of which can be pushed in its entirety.

Above the control panel 3, there is the viewfinder window 4. Through the viewfinder window, the user can observe what can be captured by the infrared camera. As shown in Figures 1-4, the viewfinder window 4 is attached to the same end of the housing 1 where the control panel 3 is also located according to an embodiment of the present invention. In another embodiment, the viewfinder window 4 is placed to the left of the control panel 3. Through the viewfinder window 4, a user can observe an image that can be captured by the system 100. For example, the image is generated by detected infrared radiation. In yet another embodiment, the viewfinder window 4 can rotate around an axis that is attached to the housing 1 from an un-raised position to a raised position.

Additionally, the housing 1 extends downward at or close to the end associated with the infrared optical lens 2. Accordingly, the housing 5 is formed. As shown in Figure 3, the housing 5 contains the laser 6, the visible-light camcorder 7, and the flash 8. In one embodiment, the laser 6 can generate a visible laser beam, which can intersect with an object. The object often is located at or near the center of an image to be captured by the system 100. As an example, the laser 6 is controlled by the switch 14. As shown in Figures 1 and 4, the switch 14 is located on a side surface of the housing 1. In another embodiment, the switch 14 is used to control one or more components of the system 100 other than or in addition to the laser 6. The visible-light camcorder 7 can be used to capture a still image or record a video by detecting radiation in the visible light spectrum. For example, the video includes audio signals. Additionally, the flash 8 can generate light to illuminate an object, which for example is a target for the visible-light camcorder 7.

The laser 6, the visible-light camcorder 7, and the flash 8 each have at least an opening through the housing 5. The openings can be used to provide optical output and/or receive input optical signals. In one embodiment, one of the three openings is located above the other two openings, and one of the other two openings is located above the other of the other two openings. In another embodiment, the centers of the three openings are on a straight line. In yet another embodiment, all of the three openings are located above an electrical interface 9. For example, the electrical interface 9 includes a USB interface. In another example, the electrical interface 9 can be used to couple the system 100 with a external computer, an external television, and/or an external memory device.

Moreover, the housing 1 extends downward at or close to the end associated with the control panel 3. Accordingly, the handle 10 is formed. For example, the handle 10 is configured to enable a user to operate the system 100 with a single hand. In another example, the handle 10 is connected to the housing 5 by the supporting component 13. The supporting component 13 includes a bottom surface. In one embodiment, the bottom surface is substantially planar. For example, the planar bottom surface is substantially perpendicular to a straight line determined by the centers of the three openings associated with the laser 6, the visible-light camcorder 7, and the flash 8. In another example, the planar bottom surface is substantially parallel to the axis around which the viewfinder window 4 can rotate from an un-raised position to a raised position.

As shown in Figure 3, the battery 11 is placed within the handle 10 according to an embodiment of the present invention. In another embodiment, the battery 11 is placed within the supporting component 13. Additionally, the monitor 12 includes a display surface from which one or more images can be observed. For example, the monitor 12 shows an image that can be captured by the system 100. In one embodiment, the image is generated by detected infrared radiation. In another embodiment, the image shown by the monitor 12 is the same as the image observed through the viewfinder window 4. The monitor 12 can rotate around a first axis that is substantially parallel to the bottom planar surface of the supporting component 13. By the rotation, the monitor 12 can be placed into a unfolded position as shown in Figure 2A, or a folded position as shown in Figure 2B. For example, at the unfolded position, the monitor 12 can rotate along a second axis that is substantially perpendicular to the first axis. In another example, at the folded position, the display surface is in contact with or in close proximity to a side surface of the handle 10.

As discussed above and further emphasized here, Figures 1-4 are merely examples, which should not unduly limit the scope of the claims. One of ordinary skill in the art would recognize many variations, alternatives, and modifications. For example, two or more of housings 1 and 5, the infrared optical lens 2, the control panel 3, the viewfinder window 4, the laser 6, the visible-light camcorder 7, the flash 8, the electrical interface 9, the handle 10, the battery 11, the monitor 12, the supporting component 13, and the switch 14 are made from a same piece of material. In another example, two or more of housings 1 and 5, the infrared optical lens 2, the control panel 3, the viewfinder window 4, the laser 6, the visible-light camcorder 7, the flash 8, the electrical interface 9, the handle 10, the battery 11, the monitor 12, the supporting component 13, and the switch 14 are made from different pieces of material.

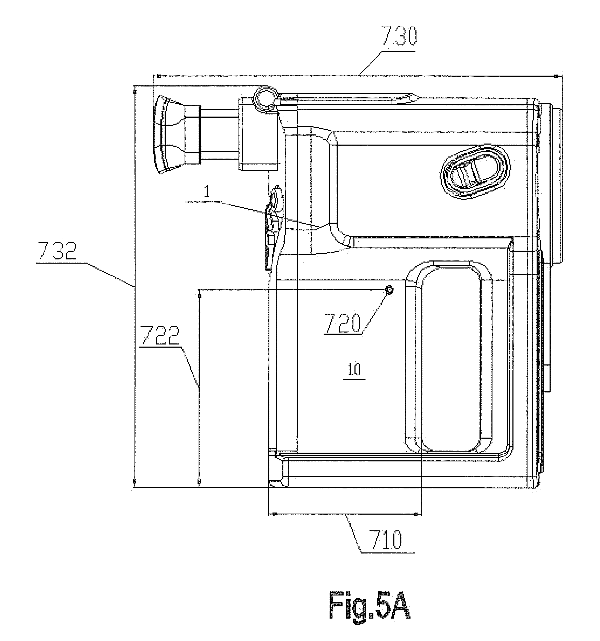

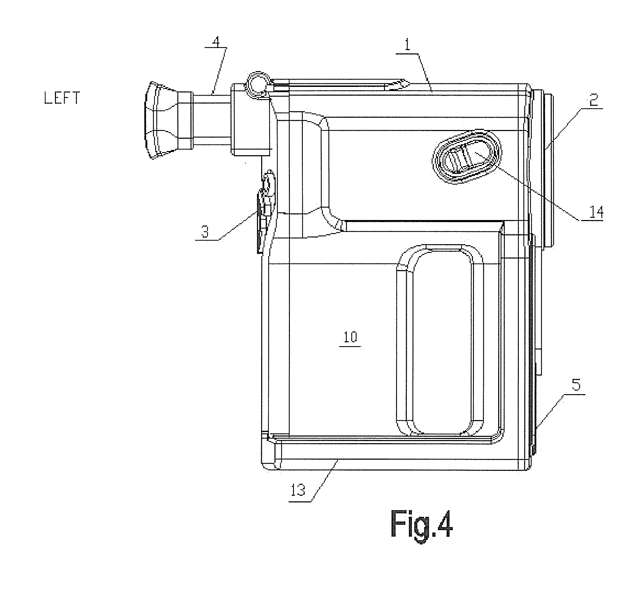

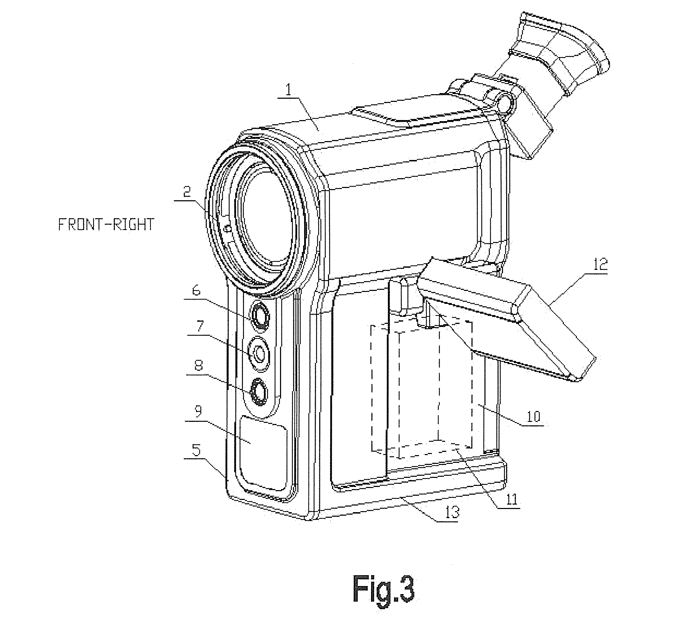

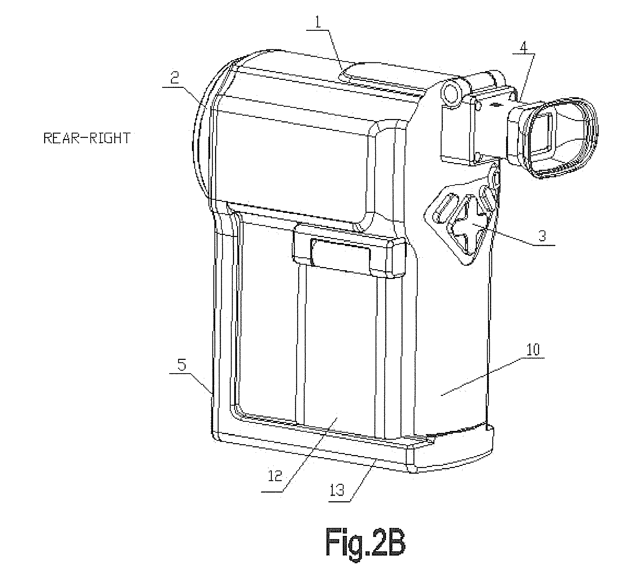

Figures 5(A) and (B) are simplified diagrams showing certain dimensions of the system 100 for infrared detection according to an embodiment of the present invention. These diagrams are merely examples, which should not unduly limit the scope of the claims. One of ordinary skill in the art would recognize many variations, alternatives, and modifications.

According to one embodiment, the system 100 is shown with the monitor 12 at the folded position and the viewfinder window at un-raised position. For example, the system 100 has dimensions 730, 732, and 734 that are equal to 191 mm, 186 mm, and 78 mm respectively. In another embodiment, the system 100 has a center of gravity 720. For example, the center of gravity 720 is located close to the interface between the housing 1 and the handle 10 and within the handle 10. As shown in Figure 5(A), the center of gravity 720 is located at a height 722 from the bottom planar surface of the supporting component 13. For example, the height 722 ranges from 30 mm to 120 mm. As shown in Figure 5(B), the center of gravity 720 is at a distance 724 from a straight line determined by the centers of the three openings associated with the laser 6, the visible-light camcorder 7, and the flash 8. For example, the distance 724 ranges from 0 to 25 mm.

In yet another embodiment, the handle 10 has a width 710. For example, the width 710 ranges from 20 mm to 75 mm. In another example, the width 710 is equal to about 70 mm. In yet another embodiment, the system 100 has a weight. For example, the weight ranges from 0.6 Kg to 2.5 Kg. In another example, the weight ranges from 0.8 Kg to 1.6 Kg. In yet another example, the weight is equal to about 1.4 Kg.

In yet another embodiment, the system 100 can be operated with a single hand by a user. Additionally, the system can be placed on a horizontal planar surface. For example, the system is in contact with the horizontal planar surface through only the bottom planar surface of the supporting component 13.

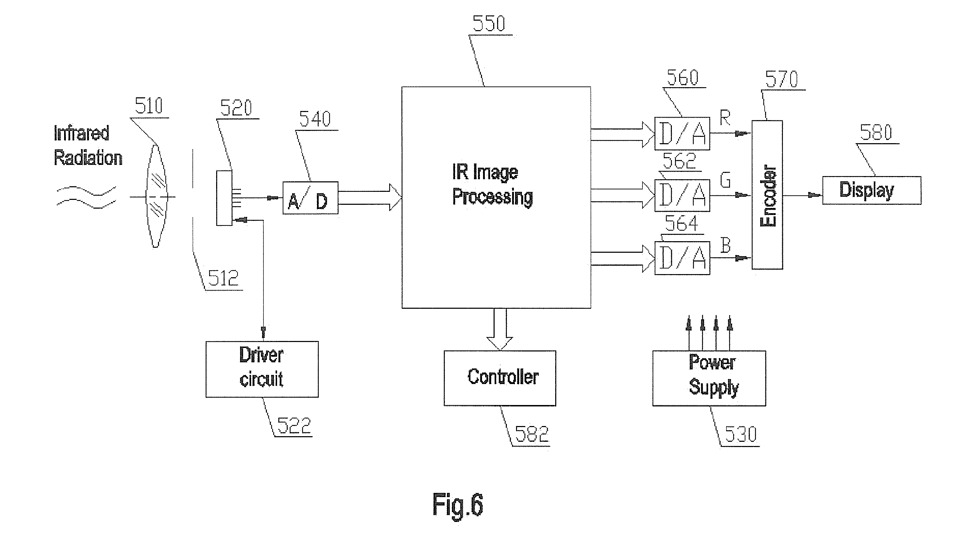

Figure 6 is a simplified diagram showing electrical and optical components of the system 100 for infrared detection according to an embodiment of the present invention. This diagram is merely an example, which should not unduly limit the scope of the claims. One of ordinary skill in the art would recognize many variations, alternatives, and modifications. The system 100 includes an infrared optical lens 510, a shutter 512, an infrared detector 520, a driver circuit 522, a power supply 530, an analog-to-digital converter 540, a signal processing component 550, digital-to-analog converters 560, 562, and 564, an encoder 570, a display 580, and a controller 582. Although the above has been shown using a selected group of components for the system 100, there can be many alternatives, modifications, and variations. For example, some of the components may be expanded and/or combined. Other components may be inserted to those noted above. Depending upon the embodiment, the arrangement of components may be interchanged with others replaced. Further details of these components are found throughout the present specification and more particularly below.

The infrared optical lens 510 receives infrared radiation and guides the infrared radiation through the shutter 512 when the shutter 512 is open. For example, the infrared optical lens 510 includes the infrared optical lens 2. The infrared radiation is then detected by the infrared detector 520. For example, the infrared detector 520 is driven by signals generated by the driver circuit 522. In another example, the infrared detector 520 can generate electrical signals in response to the infrared radiation. These electrical signals are converted by the analog-to-digital converter 540 into digital signals.

The digital signals are received by the signal processing component 550. For example, the signal processing component 550 can interact with the controller 582. In another example, the controller 582 can receive an input audio signal from a microphone and/or generate an output audio signal to a speaker. In yet another example, the controller 582 can interact with a memory device. In one embodiment, the memory device is a PC card. In another embodiment, the memory device is a flash memory. As an example, some or all of the microphone, the speaker, and the memory device are internal to the system 100. In another example, some or all of the microphone, the speaker, and the memory device are external components that interact with the controller 582 through the electrical interface 9.

After being processed by the signal processing component 550, the digital signals are converted back to analog signals by the digital-to-analog converters 560, 562, and 564. These analog signals are further processed by the encoder 570. In response, the encoder 570 generates and sent signals to the display 580. For example, the display 580 includes one or both of the viewfinder window 4 and the monitor 12. In another example, the signals include audio signals. Additionally, the signals generated by the encoder 570 are also sent to an external computer, an external television, and/or an external memory device, through, for example, the electrical interface 9 according to an embodiment of the present invention.

Additionally, the system 100 also includes the power supply 530. In one embodiment, the power supply 530 includes a power supply circuit and a battery. As an example, the power supply circuit is located within the housing 1. In another example, the battery includes the battery 11. In another embodiment, the infrared detector 520, the driver circuit 522, the analog-to-digital converter 540, the signal processing component 550, the digital-to-analog converters 560, 562, and 564, the encoder 570, and the controller 582 are located within the housing 1. In yet another embodiment, the system 100 can be used to capture a still image or record a video by detecting radiation in the infrared spectrum. For example, the video includes audio signals.

According to another embodiment of the present invention, an infrared camera system includes a first housing and a handling component. The handling component includes a first end and a second end, and the first end is in contact with the first housing. Additionally, the system includes a second housing including a third end and a fourth end. The third end is in contact with the first housing. Moreover, the system includes a supporting component. The supporting component is in contact with the handling component at the second end and in contact with the second housing at the fourth end. Also, the system includes an infrared detector located within at least one of the first housing, the second housing, the handling component, and the supporting component. The handling component and the second housing are at least partially separated by a gap region. The supporting component includes a first surface. The system is associated with a weight ranging from 0.6 kilograms to 2.5 kilograms, and is associated with a center of gravity located within the handling component. For example, the infrared camera system is implemented according to the system 100.

According to yet another embodiment, a system for infrared detection includes a first housing, and an infrared detector located within the first housing. Additionally, the system includes a handling component including a first end and a second end. The first end is attached to the first housing. Moreover, the system includes a second housing including a third end and a fourth end. The third end is attached to the first housing. Also, the system includes a supporting component. The supporting component is attached to the handling component at the second end and attached to the second housing at the fourth end. The handling component and the second housing are at least partially separated by a gap region. The supporting component includes a first surface. The system is capable of being placed on a horizontal planar surface and being in contact with the horizontal planar surface through only the first surface. Also, the system is associated with a weight ranging from 0.6 kilograms to 2.5 kilograms, and is associated with a center of gravity located within the handling component. For example, the system for infrared detection is implemented according to the system 100.

In another example, the handling component includes a second surface, and the second surface is substantially perpendicular to the first surface. In yet another example, the system for infrared detection includes a monitor. The monitor includes a third surface for displaying at least one image, and the monitor is capable of being rotated around an axis from a first position to a second position. The axis is substantially parallel to the first surface. At the first position, the third surface is substantially perpendicular to the first surface and substantially parallel with the second surface.

In yet another example, the weight ranges from 0.8 kilograms to 1.6 kilograms. In yet another example, the center of gravity is associated with a distance from the first surface, and the distance ranges from 30 mm to 120 mm. In yet another example, the first surface is substantially planar. In yet another example, the gap region is at least partially confined by the first housing, the second housing, the handling component, and the supporting component.

In yet another example, the first housing includes a fifth end and a sixth end. The system for infrared detection includes an optical lens located at or close to the fifth end. The optical lens is configured to receive infrared radiation and guide the infrared radiation through a shutter to the infrared detector if the shutter is open. Additionally, the system for infrared detection includes a viewfinder window. The viewfinder window is capable of being rotated around an axis, and the axis is attached to the sixth end and substantially parallel to the first surface. Moreover, the system for infrared detection includes a control panel. At least part of the control panel is attached to the sixth end.

In yet another example, the system for infrared detection includes a laser associated with a first opening, a visible-light camcorder associated with a second opening, and a flash associated with a third opening. Each of the first opening, the second opening, and the third opening is through the second housing. The first opening is related to a first center, the second opening is related to a second center, and the third opening is related to a third center. The first center, the second center, and the third center are configured to determine a straight line, and the straight line is substantially perpendicular to the first surface. Additionally, the center of gravity is associated with a distance from the straight line, and the distance ranges from 0 to 25 mm.

In yet another example, the system for infrared detection includes an electrical interface attached to the second housing. In yet another example, the system for infrared detection includes a battery located inside the handling component. In yet another example, the system for infrared detection is capable of being operated with a single hand by a user.

According to yet another embodiment, a system for infrared detection includes a first housing, and an infrared detector located within the first housing. Additionally, the system includes a handling component including a first end and a second end. The first end is attached to the first housing. Moreover, the system includes a second housing including a third end and a fourth end. The third end is attached to the first housing. Also, the system includes a supporting component. The supporting component is attached to the handling component at the second end and attached to the second housing at the fourth end. Additionally, the system includes a monitor including a first surface for displaying at least one image. The supporting component includes a second surface. The monitor is capable of being rotated around an axis from a first position to a second position, and the axis is substantially parallel to the second surface. At the first position, the first surface is substantially perpendicular to the second surface. For example, the system for infrared detection is implemented according to the system 100.

Although specific embodiments of the present invention have been described, it will be understood by those of skill in the art that there are other embodiments that are equivalent to the described embodiments. Accordingly, it is to be understood that the invention is not to be limited by the specific illustrated embodiments, but only by the scope of the appended claims.

## Claims

1. An infrared camera system, the system comprising:
a first housing;
a handling component including a first end and a second end, the first end being in contact with the first housing;
a second housing including a third end and a fourth end, the third end being in contact with the first housing;
a supporting component, the supporting component being in contact with the handling component at the second end and in contact with the second housing at the fourth end;
an infrared detector located within at least one of the first housing, the second housing, the handling component, and the supporting component;
wherein:
the handling component and the second housing are at least partially separated by a gap region;
the supporting component includes a first surface;
the system is associated with a weight ranging from 0.6 kilograms to 2.5 kilograms;
the system is associated with a center of gravity located within the handling component.

2. A system for infrared detection, the system comprising:
a first housing;
an infrared detector located within the first housing;
a handling component including a first end and a second end, the first end being attached to the first housing;
a second housing including a third end and a fourth end, the third end being attached to the first housing;
a supporting component, the supporting component being attached to the handling component at the second end and attached to the second housing at the fourth end;
wherein:
the handling component and the second housing are at least partially separated by a gap region;
the supporting component includes a first surface;
the system is capable of being placed on a horizontal planar surface and being in contact with the horizontal planar surface through only the first surface;
the system is associated with a weight ranging from 0.6 kilograms to 2.5 kilograms;
the system is associated with a center of gravity located within the handling component.

3. The system of claim 2 wherein the handling component includes a second surface, the second surface being substantially perpendicular to the first surface, preferably further comprising:
a monitor;
wherein:
the monitor includes a third surface for displaying at least one image;
the monitor is capable of being rotated around an axis from a first position to a second position;
the axis is substantially parallel to the first surface;
at the first position, the third surface is substantially perpendicular to the first surface and substantially parallel with the second surface.

4. The system of claim 2 wherein the weight ranges from 0.8 kilograms to 1.6 kilograms.

5. The system of claim 2 wherein the center of gravity is associated with a distance from the first surface, the distance ranging from 30 mm to 120 mm.

6. The system of claim 2 wherein the first surface is substantially planar.

7. The system of claim 2 wherein the gap region is at least partially confined by the first housing, the second housing, the handling component, and the supporting component.

8. The system of claim 2 wherein the first housing comprises a fifth end and a sixth end.

9. The system of claim 8, and further comprising:
- an optical lens located at or close to the fifth end, wherein the optical lens is configured to receive infrared radiation and guide the infrared radiation through a shutter to the infrared detector if the shutter is open;
- a viewfinder window, wherein the viewfinder window is capable of being rotated around an axis, the axis is attached to the sixth end and substantially parallel to the first surface; or
- a control panel, at least part of the control panel being attached to the sixth end.

10. The system of claim 2, and further comprising a laser associated with a first opening, a visible-light camcorder associated with a second opening, a flash associated with a third opening, wherein each of the first opening, the second opening, and the third opening is through the second housing; preferably the first opening is related to a first center, the second opening is related to a second center, the third opening is related to a third center, the first center, the second center, and the third center are configured to determine a straight line, the straight line being substantially perpendicular to the first surface; more preferably the center of gravity is associated with a distance from the straight line, the distance ranging from 0 to 25 mm.

11. The system of claim 2, and further comprising:
an electrical interface attached to the second housing; or
a battery located inside the handling component.

12. The system of claim 2 wherein the system is capable of being operated with a single hand by a user.

13. A system for infrared detection, the system comprising:
a first housing;
an infrared detector located within the first housing;
a handling component including a first end and a second end, the first end being attached to the first housing;
a second housing including a third end and a fourth end, the third end being attached to the first housing;
a supporting component, the supporting component being attached to the handling component at the second end and attached to the second housing at the fourth end;
a monitor including a first surface for displaying at least one image;
wherein:
the supporting component includes a second surface;
the monitor is capable of being rotated around an axis from a first position to a second position;
the axis is substantially parallel to the second surface;
at the first position, the first surface is substantially perpendicular to the second surface.

14. The system of claim 13 wherein:
the system is associated with a weight ranging from 0.6 kilograms to 2.5 kilograms;
the system is associated with a center of gravity located within the handling component.
